(19) **Europäisches Patentamt / European Patent Office / Office européen des brevets**

(11) **EP 4 578 586 A1**

(12) **EUROPEAN PATENT APPLICATION**
published in accordance with Art. 153(4) EPC

(43) Date of publication:
02.07.2025 Bulletin 2025/27

(21) Application number: 24824735.5

(22) Date of filing: 25.10.2024

(51) International Patent Classification (IPC):
**B23K 15/00** *(2006.01)*

(52) Cooperative Patent Classification (CPC):
**B23K 15/00**

(86) International application number:
**PCT/CN2024/127324**

(87) International publication number:
**WO 2025/092586 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 31.10.2023 CN 202311431664

(71) Applicant: **Xi'an Space Engine Company Limited
Xi'an, Shaanxi 710100 (CN)**

(72) Inventors:
• **Luo, Yatao**
 Xi'an, Shaanxi 710100 (CN)

• **Yang, Weipeng**
 Xi'an, Shaanxi 710100 (CN)
• **Zeng, Xiangdong**
 Xi'an, Shaanxi 710100 (CN)
• **Liang, Yanlong**
 Xi'an, Shaanxi 710100 (CN)
• **Mao, Dongyuan**
 Xi'an, Shaanxi 710100 (CN)
• **Wang, Kai**
 Xi'an, Shaanxi 710100 (CN)
• **Tang, Kai**
 Xi'an, Shaanxi 710100 (CN)

(74) Representative: **Vitina, Maruta et al
Agency TRIA ROBIT
P.O. Box 22
1010 Riga (LV)**

(54) **TAILOR-WELDING, SPINNING AND VARIABLE-WALL-THICKNESS FORMING METHOD FOR LARGE-SIZED EXTENSION SECTION OF LIQUID PROPELLANT ROCKET ENGINE**

(57) A method for forming a large-sized variable wall thickness extension section of a liquid rocket engine by tailor welding and spinning is provided. High-temperature alloy GH3044 is subjected to laser numerical control machining to form two segments, which are welded by electron beam welding to obtain a plate blank, followed by vacuum solid solution treatment. The plate blank is preformed into a shallow dish-shaped blank, followed by vacuum solid solution treatment. The plate blank is assembled with a spinning mandrel of a primary spin-forming mold, and is subjected to primary spin forming to obtain a primary spin-formed blank, followed by vacuum solid solution treatment. The primary spin-formed blank is assembled with a spinning mandrel of a secondary spin-forming mold, and is subjected to secondary spin forming to obtain a curved generatrix extension section.

Fig. 1

EP 4 578 586 A1

**Description**

**CROSS-REFERENCE TO RELATED APPLICATIONS**

This application claims the benefit of priority from Chinese Patent Application No. 202311431664.9, filed on October 31, 2023 and titled "Method for forming large-sized variable wall thickness extension section of liquid rocket engine by tailor welding and spinning". The content of the aforementioned application, including any intervening amendments thereto, is incorporated herein by reference in its entirety.

**TECHNICAL FIELD**

This application relates to metal forming technologies, and more particularly to a method for forming a large-sized variable wall thickness extension section of a liquid rocket engine by tailor welding and spinning.

**BACKGROUND**

A high-thrust liquid rocket engine is made from a high temperature alloy GH3044 which is rarely used for spin forming. An extension section of a thrust chamber is an ultra-large-size thin-walled GH3044 precision component, characterized by a small-end wall thickness of 1.5 mm (much larger than a large-end wall thickness 0.65 mm), a large-end diameter of $\varphi$1180 mm (much larger than a small-end diameter $\varphi$340 mm), and an axial distance of 1485 mm.

The extension section of such liquid rocket engine is a variable-wall-thickness curved generatrix extension section with the largest size in the prior art. However, it is difficult to control spinning properties of the GH3044 alloy, leading to large difficulties in the spin forming process.

The commercially-available large-sized GH3044 with a thickness of $\delta$3.5 mm needs to be specifically customized, which results in long delivery time and high cost.

**SUMMARY**

In order to overcome the shortcomings of the prior art, this application provides a method for forming a large-sized variable wall thickness extension section of a liquid rocket engine by tailor welding and spinning, in which a flat blank with a required size for spinning is formed by electron beam tailor welding, ensuring that the welding seam strength and welding flatness meet requirements of the spin forming process. In addition, this application adopts a high temperature alloy GH3044, and utilizes a specifically-designed forming method (preforming + primary cold spinning + secondary cold spinning) to obtain an ultra-large-size variable wall thickness curved generatrix extension section.

Technical solutions of the present disclosure are described as follows.

A method for forming a large-sized variable wall thickness extension section of a liquid rocket engine by tailor welding and spinning, comprising:

(S1) cutting a raw plate material into two segments which are configured to together form a circle (namely, where the two segments abut each other is a chord of the circle); subjecting the two segments to electron beam welding to form a whole circle plate to obtain a plate blank, followed by vacuum solid solution treatment;

(S2) subjecting the plate blank to deep drawing through a pre-forming mold to obtain a shallow dish-shaped blank, followed by vacuum solid solution treatment;

(S3) subjecting the shallow dish-shaped blank to a primary spin forming to obtain a primary spin-formed blank, followed by vacuum solid solution treatment; and

(S4) subjecting the primary spin-formed blank to a secondary spin forming to form the large-sized variable wall thickness extension section with a curved generatrix profile, wherein a first end of the large-sized variable wall thickness extension section is larger than a second end of the large-sized variable wall thickness extension section, a diameter of the first end of the large-sized variable wall extension section is not less than $\varphi$1180 mm, and an axis length of the large-sized variable wall extension section is not less than 1485 mm.

In step (S1), owing to an ultra large size of a high temperature alloy GH3044 extension section, a plate width of the high temperature alloy GH3044 extension section cannot reach process requirements. The plate made of GH3044 is cut into the two segments by a laser light, and a diameter of each of the two segments is $\varphi$1350-1500 mm. The two segments are subjected to electron beam welding to form the whole circle plate to obtain the plate blank, ensuring a flatness of the plate blank is not larger than 3 mm.

In step (S1), in order to prevent distortion and deformation after welding to affect a quality of spin forming process, the electron beam is adopted to weld the two segments into the whole circle plate. The welding is in need of complete penetration, and a quality of a welding seam is subjected to X-ray examination according to grade I standard of GJB 1718A-2005. In addition, a welding fixture is adopted to avoid a relatively large deformation after welding, so as to ensure the flatness of the plate blank is not larger than 3 mm.

In step (S1), conditions of the electron beam welding are as follows. Before welding, two run-on plates with a dimension not less than 30×60 mm are positioned on two ends of the welding seam. A profile of each run-on plate should be fitted to an outer circle of the whole circle plate with an assembly gap not larger than 0.2 mm and a mismatch not larger than 0.15 mm. Before welding, joint surfaces of the two segments are cleaned by acid cleaning or mechanical cleaning. In addition, a test plate with a thickness equal to a thickness of each segment is subjected to test welding. After determination of complete penetration of the test plate, the welding of the two segments is performed. After welding, a non-destructive test is adopted to ensure there are no defects in the welding seam.

In step (S1), the two segments are fixed on the welding fixture for the electron beam welding; wherein the welding fixture comprises a support assembly, a first fixing plate, a second fixing plate and a third fixing plate; a surface of the support assembly is configured to receive the two segments; the first fixing plate, the second fixing plate and the third fixing plate are configured to be located above the two segments, and two ends of each of the first fixing plate, the second fixing plate and the third fixing plate are in detachable connection with the support assembly; the first fixing plate and the second fixing plate are configured to press a larger one in the two segments; the third fixing plate is configured to be located above a smaller one in the two segments; and the second fixing plate and the third fixing plate are respectively arranged on two sides of a joint of the two segments.

In step (S1), in order to eliminate a welding stress, the vacuum solid solution treatment is performed, and conditions of a heating treatment of the vacuum solid solution treatment are: a temperature of the heating treatment is heated up to 950±10 °C within 90 min and is kept for 26-30 min; and then the temperature is heated up to 1150±10 °C and is kept for 14-16 min.

In step (S2), a debug material for the deep drawing is 1Cr18Ni9Ti. Functions of the debug material are: first, the debug material is configured to adjust a blank holder force and drawing force of the deep drawing, so that the shallow dish-shaped blank formed by the deep drawing is not wrinkled or slightly wrinkled, ensuring a quality of a subsequent formal product; second, the debug material is also used for subsequent spin forming, and is configured to adjust parameters for spin forming for the formal product.

In step (S2), the pre-forming mold comprises a blank holder, a first positioning column, a female die, a first ejector pin and a male die; the first positioning column is connected with a middle of a parting surface of the male die, and is matched with a center hole of the plate blank; the blank holder is sleeved outside of the male die, and is in slidable connection with the male die along a movement direction of the female die.

In step (S2), prior to the vacuum solid solution treatment, the shallow dish-shaped blank is rotated by 90° around its own axis, and subjected to deep drawing through the pre-forming mold for shape correction to eliminate wrinkle phenomenon at a large end of the shallow dish-shaped blank; and then the shallow dish-shaped blank is subjected to vacuum solid solution treatment.

In step (S3), the primary spin forming adopts a primary spin-forming mold; wherein the primary spin-forming mold comprises a first tail stock, a second positioning column, a first spinning mandrel, a first turntable plate and a second ejector pin; a first end of the first spinning mandrel is larger than a second end of the first spinning mandrel; the first end of the first spinning mandrel is fixed on the first turntable plate; an axis of the first spinning mandrel is provided with a through hole; the second ejector pin is arranged in the through hole, and is configured to move along the axis of the first spinning mandrel; an end of the second ejector pin is configured to cover the second end of the first spinning mandrel; the second positioning column is coaxially and fixedly connected with the end of the second ejector pin; an axis of the first tail stock is provided with a positioning hole matched with the second positioning column, so that the second positioning column is coaxially connected with the first tail stock; the shallow dish-shaped blank is placed between the second end of the first spinning mandrel and the first tail stock; the second positioning column is configured to pass through a central positioning hole of the shallow dish-shaped blank; and after the primary spin forming, the second ejector pin is configured to eject the shallow dish-shaped blank from the first spinning mandrel.

Step (S3) further comprises:

determining an initial retreat amount according to a material of the shallow dish-shaped blank;
calculating an initial spinning clearance of each part of the shallow dish-shaped blank according to the following equation: initial spinning clearance=theoretical wall thickness of each part of the primary spin-formed blank - initial retreat amount;
performing spinning on a test material according to the initial spinning clearance, and constantly adjusting a spinning clearance until a wall thickness of a spin-formed test material meets a preset requirement, so as to arrive at an adjusted spinning clearance, wherein the test material is 1Cr18Ni9Ti material with the same shape as the shallow dish-shaped blank; and
subjecting the shallow dish-shaped blank to the primary spin forming based on the adjusted spinning clearance to obtain the primary spin-formed blank.

In step (S3), before the primary spin forming, wall thicknesses of at least four generatrixes of the shallow dish-shaped blank are measured at an interval of 50-60 mm; 13 wall thickness values in total are measured on each generatrix, and 52 wall thickness values in total are measured on our generatrixes; a spinning clearance is adjusted according to a measured wall thickness during the primary spin forming; for a part with a large wall thickness, the spinning clearance is reduced, and for a part with a small wall thickness, the spinning clearance is increased, instead that one spinning clearance is applicable to all components, so that a thickness of the plate blank after the primary spin forming is closer to the theoretical wall thickness; and

the spinning clearance is adjusted within ± 0.06 mm.

In step (S3), a velocity of the primary spin forming is 10 mm/min; a spindle rotation speed of the primary spin forming is 54-25 r/min; and a corner radius R of a spinning roller of the primary spin forming is 8-10 mm.

In step (S3), before the primary spin forming, the shallow dish-shaped blank is placed between the second end of the first spinning mandrel and the first tail stock, and then is subjected to calibration; and a runout of a small end of the shallow dish-shaped blank is ≤1 mm.

Step (S4) comprises:

determining an initial retreat amount according to a material of the primary spin-formed blank;

calculating an initial spinning clearance of each part of the primary spin-formed blank according to the following equation: initial spinning clearance=theoretical wall thickness of each part of the large-sized variable wall thickness extension section - initial retreat amount;

performing spinning on a test material according to the initial spinning clearance, and constantly adjusting a spinning clearance until a wall thickness of a spin-formed test material meets a preset requirement, so as to arrive at an adjusted spinning clearance, wherein the test material is a 1Cr18Ni9Ti material with the same shape as the primary spin-formed blank; and

subjecting the primary spin-formed blank to the secondary spin forming according to the adjusted spinning clearance to obtain the large-sized variable wall thickness extension section; wherein during the secondary spin forming, a velocity of the secondary spin forming is 10 mm/min; a spindle rotation speed of the secondary spin forming is 54-25 r/min; and a corner radius R of a spinning roller of the secondary spin forming is 8-10 mm.

In step (S4), before the secondary spin forming, wall thicknesses of at least four generatrixes of the primary spin-formed blank are measured; the spinning clearance is adjusted according to a measured wall thickness during the secondary spin forming; for a part with a large wall thickness, the spinning clearance is reduced, and for a part with a small wall thickness, the spinning clearance is increased, instead that one clearance value is applicable to all components, so that a thickness of the plate blank after the secondary spin forming is closer to the theoretical wall thickness; and the spinning clearance is adjusted within ± 0.06 mm. In step (S3), the initial spinning clearance is determined by the theoretical wall thickness of each point of the primary spin-formed blank minus the initial retreat clearance of 0.45 mm. The 1Cr18Ni9Ti debug material is subjected to test spin forming according to the initial spinning clearance; a wall thickness of each point of a first test spin-forming component is measured, and is compared with the theoretical wall thickness; if the wall thickness of each point of the first test spin-forming component is larger than the theoretical wall thickness, the spin-forming clearance is decreased, and if the wall thickness of each point of the first test spin-forming component is smaller than the theoretical wall thickness, the spin-forming clearance is increased, until the 1Cr18Ni9Ti debug material after the test spin forming meets the requirement, an adjusted spin-forming clearance is obtained; and then the GH3044 component is subjected to the primary spin forming with the adjusted spin-forming clearance; wherein the shape and parameters of the 1Cr18Ni9Ti debug material are consistent with that of the GH3044 component.

This application has the following beneficial effects.

(1) In this application, the plate blank with a desired size is produced by electron beam welding, and it is not necessary to purchase a large-sized plate blank.
(2) This application provides a welding fixture design meeting requirements of the electron beam welding and requirements of profile dimensions after the electron beam welding, ensuring that process requirements of subsequent spin forming are satisfied, and facilitating improving the forming quality.
(3) The forming method of this application includes deep drawing, primary cold spinning and secondary cold spinning. Process parameters, such wall thickness, spinning clearance and feeding rate, are controlled to make the spin forming process stable and reproducible. In addition, the product precision is improved (the tolerance of a wall thickness of each point is ±0.06 mm, and the profile tolerance of the parting surface is ≤3).
(4) In this application, the forming of the extension section completely depends on the spin forming parameters, and does not need subsequent turning of the wall thickness. The turning treatment is designed only for the machining allowance of both ends, which avoids the out of tolerance in the wall thickness caused by turning, reducing the processing risks.

**BRIEF DESCRIPTION OF THE DRAWINGS**

Fig. 1 is a structural diagram of a pre-forming mold according to an embodiment of the present disclosure.
Fig. 2 is a structural diagram of a primary spin-forming mold according to an embodiment of the present disclosure.
Fig. 3 is a structural diagram of a secondary spin-forming mold according to an embodiment of the present disclosure.

Fig. 4 shows two segments according to an embodiment of the present disclosure.

Fig. 5 shows a shallow dish-shaped blank according to an embodiment of the present disclosure.

Fig. 6 shows a primary spin-formed blank according to an embodiment of the present disclosure.

Fig. 7 shows a secondary spin-formed blank according to an embodiment of the present disclosure.

Fig. 8 shows a welding fixture for electron beam welding according to an embodiment of the present disclosure.

In Figures: 1, blank holder; 2, first positioning column; 3, female die; 4, first ejector pin; 5, male die; 6, first tail stock; 7, second positioning column; 8, first spinning mandrel; 9, first turntable plate; 10, second ejector pin; 11, second tail stock; 12, third positioning column; 13, second spinning mandrel; 14, second turntable plate; 15, third ejector pin; 16, support assembly; 17, first fixing plate; 18, second fixing plate; and 19, third fixing plate.

## DETAILED DESCRIPTION OF EMBODIMENTS

The present disclosure will be described below in detail, and characteristics and advantages of the present disclosure will become clearer and more specific along with the description. The term "exemplary" used herein means "used as an example and embodiment, or illustrative". Any "exemplary" embodiments described herein do not need to be interpreted as superior to or better than other embodiments. Although various aspects of the embodiments are shown in the accompanying drawings, unless otherwise specified, the drawings do not need to be drawn to scale.

A forming method for welding and spin forming variable wall thickness of a large-size extension section in a liquid rocket engine includes the following steps.

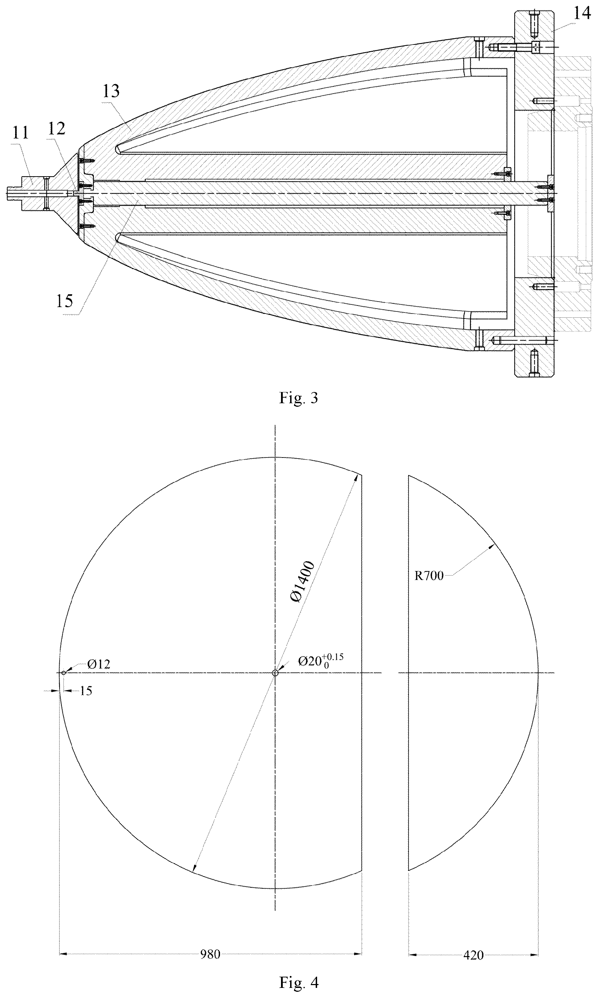

(S1) Owing to the ultra large size, a plate width of the high temperature alloy GH3044 extension section cannot reach process requirements. A plate made of GH3044 is cut, by a laser light, into two segments which are configured to together form a circle. Referring to Fig. 4, an electron beam is adopted to weld the two segments into a whole circle plate to obtain a plate blank. Conditions of electron beam welding are as follows. Before welding, two run-on plates with a dimension not less than $30 \times 60$ mm are positioned on two ends of the welding seam. A profile of each run-on plate should be fitted to an outer circle of the whole circle plate with an assembly gap not larger than 0.2 mm and a mismatch not larger than 0.15 mm. Before welding, joint surfaces of the two segments are subjected to cleaning by acid cleaning. A test plate with a thickness equal to a thickness of the two segments is subjected to test welding. After determination of complete penetration of the test plate, the welding of the two segments is performed. After welding, a non-destructive test is adopted to ensure there are no defects in the welding seam. A vacuum solid solution treatment is performed, and conditions of the vacuum solid solution treatment are: a temperature of the vacuum solid solution treatment is heated up to $950 \pm 10$ °C within 90 min and is kept for 26-30 min; and then the temperature is heated up to $1150 \pm 10$ °C and is kept for 14-16 min.

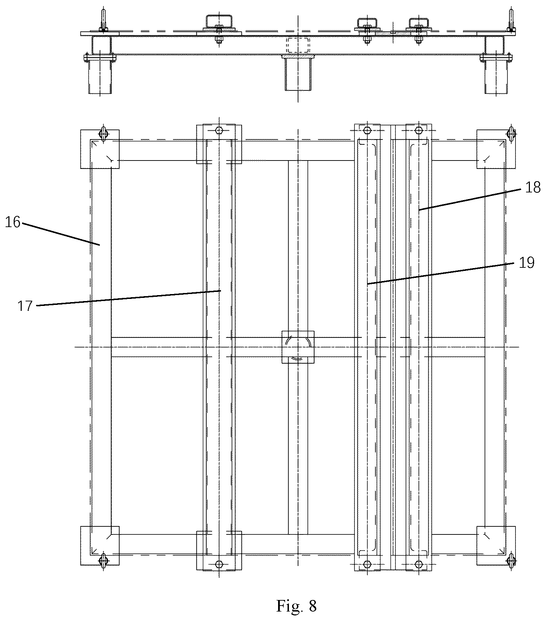

Referring to Fig. 8, the two segments are fixed on a welding fixture for the electron beam welding. The welding fixture includes a support assembly, a first fixing plate, a second fixing plate and a third fixing plate. A surface of the support assembly is configured to receive the two segments. The first fixing plate, the second fixing plate and the third fixing plate are configured to press the two segments, and two ends of each of the first fixing plate, the second fixing plate and the third fixing plate are in detachable connection with the support assembly. The first fixing plate and the second fixing plate are configured to be located above a larger one in the two segments. The third fixing plate is configured to be located above a smaller one in the two segments. The second fixing plate and the third fixing plate are respectively arranged on two sides of a joint of the two segments.

(S2) 1Cr18Ni9Ti is configured as a debug material for deep drawing through a pre-forming mold, and then the plate blank is subjected deep drawing through the pre-forming mold to obtain a shallow dish-shaped blank, followed by vacuum solid solution treatment. Step (S2) includes the following steps.

First, parameters of a blank holder force and a drawing force are determined during deep drawing through the pre-forming mold to form the shallow dish-shaped blank. Determined parameters of the blank holder force and the determined drawing force are adopted to subject the plate blank for deep drawing through the pre-forming mold to obtain a shallow dish-shaped blank. The shallow dish-shaped blank is rotated by 90° around its own axis, and subjected to deep forming through the pre-forming mold for shape correction to eliminate wrinkle phenomenon at a large end of the shallow dish-shaped blank. The shallow dish-shaped debug material and the shallow dish-shaped blank are subjected to vacuum solid solution treatment, and the conditions of the vacuum solid solution treatment are: the temperature of the vacuum solid solution treatment is heated up to $950 \pm 10$ °C within 90 min and is kept for 26-30 min; and then the temperature is heated up to 1150 $\pm 10$ °C and is kept for 14-16 min.

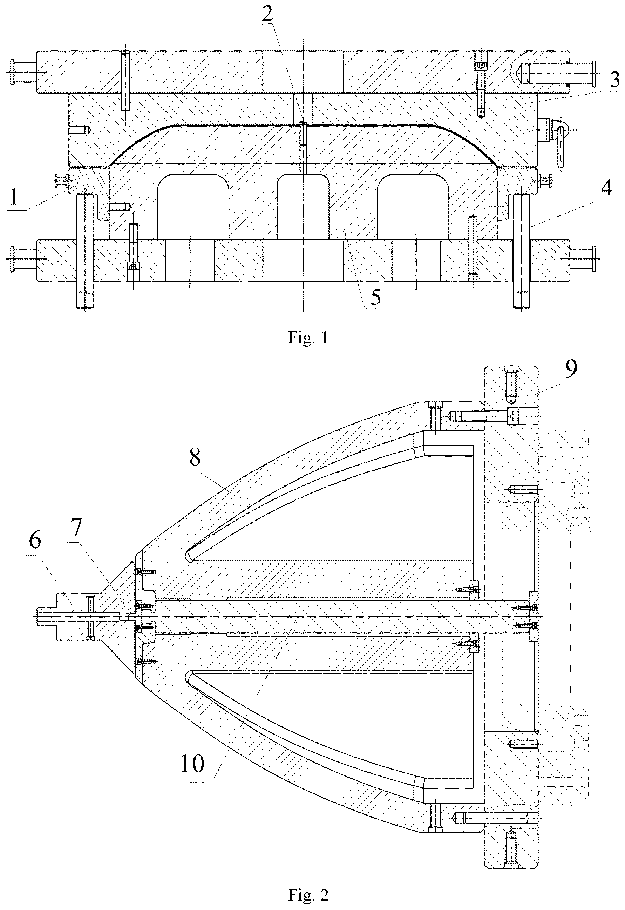

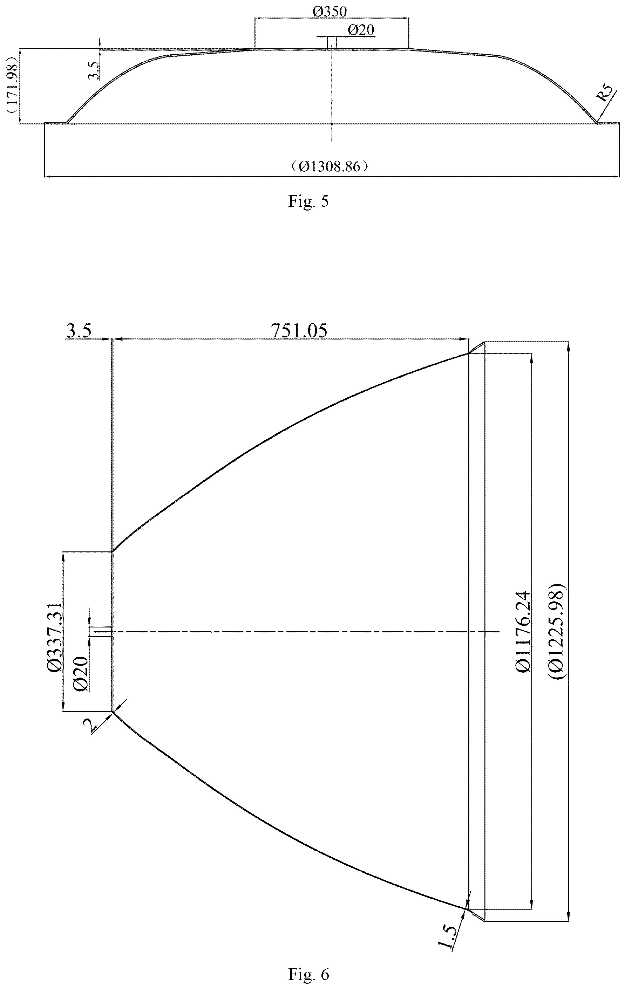

In this embodiment, referring to Fig. 1, the pre-forming mold includes a blank holder 1, a first positioning column 2, a female die 3, a first ejector pin 4 and a male die 5. The female die 3 is arranged at a side of the male die 5, and is configured to move in a direction near or away from the male die 5. The first positioning column 2 is connected with a middle of a parting surface of the male die 5, and is matched with a center hole of the plate blank. The blank holder 1 is sleeved outside the male die 5, and is in slidable connection with the male die 5 along a movement direction of the female die 3. During the deep drawing, the plate blank is provided with the center hole, the center hole of the plate blank is configured to be passed through by the first positioning column 2 and be placed on the male die 5. The first ejector pin 4 is configured to lift the blank holder 1 and the GH3044 component, and the female die 3 is configured to press down on the blank holder 1. Conditions of the deep drawing are: the drawing force is 500 tons, and the blank holder force is 350 tons. The GH3044 component is subjected to deep drawing. After the deep drawing, the female die 3 is lifted, and the blank holder 1 is configured to lift the GH3044 component. The GH3044 component is subjected to being rotated by 90°, followed by deep drawing again for shape calibration to eliminate wrinkle phenomenon at the large end of the shallow dish-shaped blank. The shallow dish-shaped blank as shown in Fig. 5 is obtained.

(S3) The shallow dish-shaped blank is subjected to a primary spin forming to obtain a primary spin-formed blank, followed by vacuum solid solution treatment. Step (S3) includes the following steps.

An initial retreat amount is determined according to a material of the shallow dish-shaped blank. An initial spinning clearance of each part of the shallow dish-shaped blank is calculated according to the following equation: initial spinning clearance=theoretical wall thickness of each part of the primary spin-formed blank - initial retreat amount. According to the initial spinning clearance, a 1Cr18Ni9Ti debug material with the same shape as the shallow dish-shaped blank is arranged on a primary spin-forming mold and is subjected to test spin forming. A spinning clearance of the test spin forming is constantly adjusted. When a wall thickness of the 1Cr18Ni9Ti debug material after the test spin forming meets the requirement, an adjusted spinning clearance is obtained. The shallow dish-shaped blank is arranged on the primary spin-forming mold and then is subjected to correction, until a runout of an end of the shallow dish-shaped blank is ≤1 mm. The shallow dish-shaped blank is subjected to spinning with the adjusted spinning clearance to obtain the primary spin-formed blank. During the primary spin forming, a velocity of the primary spin forming is 10 mm/min, a spindle rotation speed of the primary spin forming is 54-25 r/min, and a corner radius R of a spinning roller of the primary spin forming is 8-10 mm. The conditions of the vacuum solid solution treatment are: the temperature of the vacuum solid solution treatment is heated up to 950±10 °C within 90 min and is kept for 26-30 min; and then the temperature is heated up to 1150±10 °C and is kept for 14-16 min.

Before the primary spin forming, wall thicknesses of different parts of at least four generatrixes of the shallow dish-shaped blank are measured. The spinning clearance is adjusted according to a measured wall thickness during the primary spin forming. For a part with a large wall thickness, the spinning clearance is reduced, and for a part with a small wall thickness, the spinning clearance is increased, instead that one clearance value is applicable to all components, so that a thickness of the plate blank after the primary spin forming is closer to the theoretical wall thickness. The spinning clearance is adjusted within ± 0.06 mm.

In this embodiment, referring to Fig. 2, the primary spin-forming mold includes a first tail stock 6, a second positioning column 7, a first spinning mandrel 8, a first turntable plate 9 and a second ejector pin 10. A first end of the first spinning mandrel 8 is larger than a second end of the first spinning mandrel 8. The first end of the first spinning mandrel 8 is fixed on the first turntable plate 9. An axis of the first spinning mandrel 8 is provided with a through hole. The second ejector pin 10 is arranged in the through hole, and is configured to move along the axis of the first spinning mandrel 8. An end of the second ejector pin 10 is configured to cover the second end of the first spinning mandrel 8. The second positioning column 7 is coaxially and fixedly connected with the end of the second ejector pin 10. An axis of the first tail stock 6 is provided with a positioning hole matched with the second positioning column 7, so that the second positioning column 7 is coaxially connected with the first tail stock 6, and the second end of the first spinning mandrel 8 is coaxially connected with the first tail stock 6 through the second positioning column 7. The shallow dish-shaped blank is placed between the second end of the first spinning mandrel 8 and the first tail stock 6, and is fixed outside the first spinning mandrel 8 through a pressure of the second positioning column 7. The second positioning column 7 is configured to pass through a central positioning hole of the shallow dish-shaped blank and the first tail stock 6. After the primary spin forming, the second ejector pin 10 is configured to eject the shallow dish-shaped blank from the first spinning mandrel 8. The primary spin-formed blank as shown in Fig. 6 is obtained.

(S4) The primary spin-formed blank is subjected to a secondary spin forming to form the large-sized variable wall thickness extension section with a curved generatrix profile, where a first end of the large-sized variable wall thickness extension section is larger than a second end of the large-sized variable wall thickness extension section, a diameter of the first end of the large-sized variable wall thickness extension section is not less than φ1180 mm, and an axis length of the large-sized variable wall thickness extension section is not less than 1485 mm. Step (S4) includes the following steps.

An initial retreat amount is determined according to a material of the primary spin-formed blank, and an initial spinning clearance of each part of the primary spin-formed blank is calculated according to the following equation: initial spinning clearance=theoretical wall thickness of each part of the large-sized variable wall thickness extension section - initial retreat amount.

According to the initial spinning clearance, the 1Cr18Ni9Ti debug material with the same shape as the primary spin-formed blank is subjected to test spin forming, and a spinning clearance is constantly adjusted until a wall thickness of a spin-formed test material meets a preset requirement, so as to arrive at an adjusted spinning clearance.

The primary spin-formed blank is subjected to the secondary spin forming according to the adjusted spinning clearance to obtain the large-sized variable wall thickness extension section. During the secondary spin forming, a velocity of the secondary spin forming is 10 mm/min, a spindle rotation speed of secondary spin forming is 54-25 r/min, and a corner radius R of a spinning roller of the secondary spin-forming mold is 8-10 mm. The ultra-large-size variable wall thickness curved generatrix extension section is obtained.

Before the secondary spin forming, wall thicknesses of at least four generatrixes of the primary spin-formed blank are measured at an interval of 10-20 mm. The spinning clearance is adjusted according to a measured wall thickness during the secondary spin forming. For a part with a large wall thickness, the spinning clearance is reduced, and for a part with a small wall thickness, the spinning clearance is increased, instead that one clearance value is applicable to all components, so that a thickness of the plate blank after the secondary spin forming is closer to the theoretical wall thickness. The spinning clearance is adjusted within $\pm$ 0.06 mm.

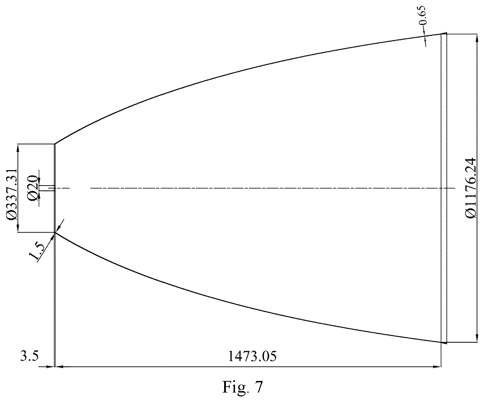

In this embodiment, a secondary spin-forming mold for secondary spin-forming has the same structure as the primary spin-forming mold. The secondary spin-forming mold includes a second tail stock 11, a third positioning column 12, a second spinning mandrel 13, a second turntable plate 14 and a third ejector pin 15. A first end of the second spinning mandrel 13 is larger than a second end of the second spinning mandrel 13. The first end of the second spinning mandrel 13 is fixed on the second turntable plate 14. The second end of the second spinning mandrel 13 is coaxially connected with the second tail stock 11 through the third positioning column 12. The primary spin-formed blank is arranged between the second end of the second spinning mandrel 13 and the second tail stock 11, and is fixed outside the second spinning mandrel 13 through a pressure of the third positioning column 12. The third positioning column 12 is configured to pass through a central positioning hole of the primary spin-formed blank and the second tail stock 11. After the secondary spin forming, the third ejector pin 15 is configured to eject the primary spin-formed blank from the second spinning mandrel 13. The secondary spin-formed blank as shown in Fig. 7 is obtained.

In this embodiment, the tolerance of a wall thickness of each point is $\pm$0.06 mm, and the profile tolerance of the parting surface is ≤3.

In the present disclosure, each of the two segments has a thickness of 3.5 mm and a diameter of 1400 mm. The two segments are subjected to the electron beam welding to form the whole circle. After the primary spin forming, a first end of the primary spin-formed blank is larger than a second end of the primary spin-formed blank. The second end of the primary spin-formed blank has a wall thickness of $2.04^{+0.1}_{-0.05}$ mm, and the first end of the primary spin-formed blank has a wall thickness of $1.5^{+0.1}_{-0.05}$ mm. After the secondary spin forming, a first end of the secondary spin-formed blank is larger than a second end of the secondary spin-formed blank. The second end of the secondary spin-formed blank has a wall thickness of 1.5$\pm$0.06 mm, and the first end of the secondary spin-formed blank has a wall thickness of 0.65 $\pm$0.06 mm.

**Embodiment 1**

(1) Two segments which are configured to together form a circle are subjected to electron beam welding to obtain a whole circle with a size of $\delta$3.5×$\varphi$1400 mm. Conditions of the electron beam welding are as follows. Before the electron beam welding, two run-on plates with a dimension not less than 30×60 mm are positioned on two ends of the welding seam. A profile of each run-on plate should be fitted to an outer circle of the whole circle plate with an assembly gap of 0.1 mm and a mismatch of 0.1 mm. Before welding, the two segments are subjected to cleaning by acid cleaning. In addition, a test plate with a thickness equal to a thickness of each of the two segments is subjected to test welding. After determination of complete penetration of the test plate, the welding of the two segments is performed. After welding, a non-destructive test is adopted to ensure there are no defects in the welding seam. A stainless steel 1Cr18Ni9Ti debug material is cut, and a size and shape of the debug material are the same as the high temperature alloy. The high temperature alloy is subjected to the vacuum solid solution treatment. Conditions of a heating treatment of the vacuum solid solution treatment are: a temperature of the heating treatment is heated up to 950$\pm$10 °C within 90 min and is kept for 26-30 min; and then the temperature is heated up to 1150$\pm$10 °C and is kept for 14-16 min.

(2) The debug material and the high temperature alloy are subjected to pre-forming, that is, the deep drawing, on an 800-ton hydraulic press machine. Conditions of the deep drawing are: a drawing force is 500 tons, and a blank holder force is 350 tons. The debug material and the high temperature alloy are rotated by 90°, followed by deep drawing again for shape calibration with the same forces to eliminate wrinkle phenomenon at a large end of the extension section. Then the debug material and the high temperature alloy are subjected to vacuum solid solution treatment. Conditions of the vacuum solid solution treatment are: the temperature of the vacuum solid solution treatment is heated up to 950$\pm$10 °C within 90 min and is kept for 26-30 min; and then the temperature is heated up to 1150±10 °C and is kept for 14-16 min.

(3) A first spinning mandrel is arranged on a 60-ton spin forming machine for adjustment. A first end of the first spinning mandrel is larger than a second end of the first spinning mandrel. Radial runout of both ends of the first spinning mandrel is ≤0.06 mm. A first spin-forming program is prepared, and gaps of 24 points are prepared along an axial direction. A principle for selecting the 24 points is: a theoretical wall thickness difference between each two points is 0.03-0.05 mm. A first spinning clearance is a distance between a spinning roller angle R and the first spinning mandrel, and is determined by a wall thickness of each point of a primary spin-formed blank minus an initial retreat amount. After preparation of the first spin-forming program, the first spinning clearance is measured point by point by a feeler gauge. The component is arranged and then is subjected to primary spin forming to obtain a primary spin-formed blank. In this step, the stainless steel 1Cr18Ni9Ti debug material is subjected to test spin forming first, and the first spinning clearance is adjusted according to a wall thickness of the stainless steel 1Cr18Ni9Ti debug material until the wall thickness of the stainless steel 1Cr18Ni9Ti debug material meets the requirements. Then the high temperature alloy is subjected to primary spin forming followed by vacuum solid solution treatment. Conditions of the vacuum solid solution treatment are: the temperature of the vacuum solid solution treatment is heated up to 950±10 °C within 90 min and is kept for 26-30 min; and then the temperature is heated up to 1150±10 °C and is kept for 14-16 min. The stainless steel 1Cr18Ni9Ti debug material is also subjected to vacuum solid solution treatment.

A second spinning mandrel is arranged on the 60-ton spin forming machine for adjustment. A first end of the second spinning mandrel is larger than a second end of the second spinning mandrel. Radial runout of both ends of the first spinning mandrel is ≤0.06 mm. A second spin-forming program is prepared, and gaps of 24 points are prepared along an axial direction. A principle for selecting the 24 points is: a theoretical wall thickness difference between each two points is 0.03-0.05 mm. A second spinning clearance is a distance between a spinning roller angle R and the second spinning mandrel, and is determined by a wall thickness of each point of a secondary spin-formed blank minus an initial retreat amount. After preparation of the second spin-forming program, the second spinning clearance is measured point by point by the feeler gauge. The component is arranged and then is subjected to secondary spin forming to obtain a variable wall thickness extension section. In this step, the stainless steel 1Cr18Ni9Ti debug material is subjected to test spin forming first, and the second spin-forming clearance is adjusted according to a wall thickness of the stainless steel 1Cr18Ni9Ti debug material until the wall thickness of the stainless steel 1Cr18Ni9Ti debug material meets the requirements. Then the high temperature alloy GH3044 component is subjected to secondary spin forming followed by vacuum solid solution treatment. Both ends of the high temperature alloy GH3044 component is cut to final dimensions.

In this embodiment, a thickness of the plate blank is 3.45-3.55 mm.

After the electron beam welding and polishing on the welding seam, a thickness of the plate is not less than the thickness of the plate made of GH3044. After the electron beam welding, a flatness should be ensured not larger than 3 mm.

After the primary spin forming, a first end of the primary spin-formed blank is larger than a second end of the primary spin-formed blank. A flat wall thickness of the second end of the primary spin-formed blank is 3.5 mm, a curved wall thickness of the second end of the primary spin-formed blank is $2.042.04_{-0.05}^{+0.1}$ mm, and a diameter of the second end of the primary spin-formed blank is 337 mm. A curved wall thickness of the first end of the primary spin-formed blank is $1.52.04_{-0.05}^{+0.1}$ mm, and an effective diameter of the first end of the primary spin-formed blank is 1176 mm. An effective length of the primary spin-formed blank is 754.5 mm.

After the secondary spin forming, a first end of the large-sized variable wall thickness extension section with a curved generatrix profile is larger than a second end of the large-sized variable wall thickness extension section with a curved generatrix profile. A flat wall thickness of the second end of the large-sized variable wall thickness extension section with a curved generatrix profile is 3.5 mm, a curved wall thickness of the second end of the large-sized variable wall thickness extension section with a curved generatrix profile is 1.5±0.06 mm, and a diameter of the second end of the large-sized variable wall thickness extension section with a curved generatrix profile is 337 mm. A curved wall thickness of the first end of the large-sized variable wall thickness extension section with a curved generatrix profile is 0.65 ±0.06 mm, and an effective diameter of the first end of the large-sized variable wall thickness extension section with a curved generatrix profile is 1176 mm. An effective length of the large-sized variable wall thickness extension section with a curved generatrix profile is 1476.5 mm.

A product accuracy of the extension section reaches ±0.06 mm of an allowance of a wall thickness of each point, and ≤3 mm of the profile.

This application is described in detail with reference of embodiments above, however, these descriptions are not intended to limit this application. It should be understood by those skilled in the art that various equivalent replacements, modifications and improvements made without deviating from the spirit and range of this application shall fall within the scope of this application defined by the appended claims.

The content not described in detail in the description of this application is the prior art for those skilled in the art.

## Claims

1. A method for forming a large-sized variable wall thickness extension section of a liquid rocket engine by tailor welding and spinning, comprising:

   (S1) cutting a raw plate material into two segments which are configured to together form a circle; subjecting the two segments to electron beam welding to form a whole circle to obtain a plate blank, followed by vacuum solid solution treatment;
   (S2) subjecting the plate blank to deep drawing through a pre-forming mold to obtain a shallow dish-shaped blank, followed by vacuum solid solution treatment;
   (S3) subjecting the shallow dish-shaped blank to a primary spin forming to obtain a primary spin-formed blank, followed by vacuum solid solution treatment; and
   (S4) subjecting the primary spin-formed blank to a secondary spin forming to form the large-sized variable wall thickness extension section with a curved generatrix profile, wherein a first end of the large-sized variable wall thickness extension section is larger than a second end of the large-sized variable wall thickness extension section, a diameter of the first end of the large-sized variable wall thickness extension section is not less than $\varphi$1180 mm, and an axis length of the large-sized variable wall thickness extension section is not less than 1485 mm.

2. The method of claim 1, **characterized in that** in step (S1), the two segments are fixed on a welding fixture for the electron beam welding;
   wherein the welding fixture comprises a support assembly (16), a first fixing plate (17), a second fixing plate (18) and a third fixing plate (19); a surface of the support assembly (16) is configured to receive the two segments; the first fixing plate (17), the second fixing plate (18) and the third fixing plate (19) are configured to be located above the two segments, and two ends of each of the first fixing plate (17), the second fixing plate (18) and the third fixing plate (19) are in detachable connection with the support assembly; the first fixing plate (17) and the second fixing plate (18) are configured to press a larger one in the two segments; the third fixing plate (19) is configured to be located above a smaller one in the two segments; and the second fixing plate (18) and the third fixing plate (19) are respectively arranged on two sides of a joint of the two segments.

3. The method of claim 1, **characterized in that** in step (S2), the pre-forming mold comprises a blank holder (1), a first positioning column (2), a female die (3), a first ejector pin (4) and a male die (5); the first positioning column (2) is connected with a middle of a parting surface of the male die (5), and is matched with a center hole of the plate blank; and the blank holder (1) is sleeved outside the male die (5), and is in slidable connection with the male die (5) along a movement direction of the female die (3).

4. The method of any one of claims 1-3, **characterized in that** in step (S2), prior to the vacuum solid solution treatment, the shallow dish-shaped blank is rotated by 90° around its own axis, and subjected to deep drawing through the pre-forming mold for shape correction to eliminate wrinkle phenomenon at a large end of the shallow dish-shaped blank.

5. The method of claim 1, **characterized in that** in step (S3), the primary spin forming adopts a spin-forming mold; wherein the spin-forming mold comprises a first tail stock (6), a second positioning column (7), a first spinning mandrel (8), a first turntable plate (9) and a second ejector pin (10); a first end of the first spinning mandrel (8) is larger than a second end of the first spinning mandrel (8); the first end of the first spinning mandrel (8) is fixed on the first turntable plate (9); an axis of the first spinning mandrel (8) is provided with a through hole; the second ejector pin (10) is arranged in the through hole, and is configured to move along the axis of the first spinning mandrel (8); an end of the second ejector pin (10) is configured to cover the second end of the first spinning mandrel (8); the second positioning column (7) is coaxially and fixedly connected with the end of the second ejector pin (10); an axis of the first tail stock (6) is provided with a positioning hole matched with the second positioning column (7), so that the second positioning column (7) is coaxially connected with the first tail stock (6); the shallow dish-shaped blank is placed between the second end of the first spinning mandrel (8) and the first tail stock (6); the second positioning column (7) is configured to pass through a central positioning hole of the shallow dish-shaped blank; and after the primary spin forming, the second ejector pin (10) is configured to eject the shallow dish-shaped blank from the first spinning mandrel (8).

6. The method of claim 1, **characterized in that** step (S3) further comprises:

   determining an initial retreat amount according to a material of the shallow dish-shaped blank;
   calculating an initial spinning clearance of each part of the shallow dish-shaped blank according to the following equation: initial spinning clearance=theoretical wall thickness of each part of the primary spin-formed blank - initial retreat amount;

performing spinning on a test material according to the initial spinning clearance, and constantly adjusting a spinning clearance until a wall thickness of a spin-formed test material meets a preset requirement, so as to arrive at an adjusted spinning clearance, wherein the test material is 1Cr18Ni9Ti material with the same shape as the shallow dish-shaped blank; and subjecting the shallow dish-shaped blank to the primary spin forming based on the adjusted spinning clearance to obtain the primary spin-formed blank.

7. The method of claim 1, **characterized in that** in step (S3), before the primary spin forming, wall thicknesses of at least four generatrixes of the shallow dish-shaped blank are measured at an interval of 50-60 mm; a spinning clearance is adjusted according to a measured wall thickness during the primary spin forming; for a part with a large wall thickness, the spinning clearance is reduced, and for a part with a small wall thickness, the spinning clearance is increased; and

the spinning clearance is adjusted within $\pm$ 0.06 mm.

8. The method of claim 1, **characterized in that** in step (S3), a velocity of the primary spin forming is 10 mm/min, a spindle rotation speed of the primary spin forming is 54-25 r/min, and a corner radius R of a spinning roller of the primary spin forming is 8-10 mm.

9. The method of claim 1, **characterized in that** step (S4) comprises:

determining an initial retreat amount according to a material of the primary spin-formed blank; calculating an initial spinning clearance of each part of the primary spin-formed blank according to the following equation: initial spinning clearance=theoretical wall thickness of each part of the large-sized variable wall thickness extension section - initial retreat amount;

performing spinning on a test material according to the initial spinning clearance, and constantly adjusting a spinning clearance until a wall thickness of a spin-formed test material meets a preset requirement, so as to arrive at an adjusted spinning clearance, wherein the test material is a 1Cr18Ni9Ti material with the same shape as the primary spin-formed blank; and subjecting the primary spin-formed blank to the secondary spin forming according to the adjusted spinning clearance to obtain the large-sized variable wall thickness extension section;

wherein during the secondary spin forming, a velocity of the secondary spin forming is 10 mm/min; a spindle rotation speed of the secondary spin forming is 54-25 r/min; and a corner radius R of a spinning roller of the secondary spin forming is 8-10 mm.

10. The method of claim 9, **characterized in that** in step (S4), before the secondary spin forming, wall thicknesses of at least four generatrixes of the primary spin-formed blank are measured at an interval of 10-20 mm; the spinning clearance is adjusted according to a measured wall thickness during the secondary spin forming; for a part with a large wall thickness, the spinning clearance is reduced, and for a part with a small wall thickness, the spinning clearance is increased; and the spinning clearance is adjusted within $\pm$ 0.06 mm.

Fig. 1

Fig. 2

Fig. 3

Fig. 4

Ø350

Ø20

3.5

(171.98)

R5

(Ø1308.86)

Fig. 5

3.5

751.05

Ø337.31

Ø20

2

Ø1176.24

(Ø1225.98)

1.5

Fig. 6

Fig. 7

Fig. 8

## INTERNATIONAL SEARCH REPORT

| International application No. |
| --- |
| **PCT/CN2024/127324** |

| A. | CLASSIFICATION OF SUBJECT MATTER |
| --- | --- |

B23K 15/00(2006.01)i

According to International Patent Classification (IPC) or to both national classification and IPC

| B. | FIELDS SEARCHED |
| --- | --- |

Minimum documentation searched (classification system followed by classification symbols)

IPC:B23K

Documentation searched other than minimum documentation to the extent that such documents are included in the fields searched

Electronic data base consulted during the international search (name of data base and, where practicable, search terms used)

CJFD, CNTXT, ENTXTC: 板, 拆卸, 拆装, 电子束, 焊接, 激光, 工装, 夹具, 固定, 冷旋, 旋模, 旋压, 固溶, 支撑; ENTXT, VEN: plate, disk, plank, dismount, demount, disassembly, electron beam, weld, laser, clamp, jig, fix, spin, solution treating, support.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 115647177 A (XI'AN SPACE ENGINE CO., LTD.) 31 January 2023 (2023-01-31) description, paragraphs 6-55, and figures 1-6 | 1-10 |
| Y | CN 116871389 A (ZHUZHOU TIMES NEW MATERIAL TECHNOLOGY CO., LTD.) 13 October 2023 (2023-10-13) description, paragraphs 56-60 | 1-10 |
| Y | CN 111922167 A (XI'AN SPACE ENGINE CO., LTD.) 13 November 2020 (2020-11-13) description, paragraphs 6-60, and figures 1-6 | 1-10 |
| Y | CN 101596649 A (HUAZHONG UNIVERSITY OF SCIENCE AND TECHNOLOGY) 09 December 2009 (2009-12-09) description, pages 3-5, and figures 1-4 | 2, 4 |
| A | CN 114799001 A (XI'AN SPACE ENGINE CO., LTD.) 29 July 2022 (2022-07-29) entire document | 1-10 |
| A | CN 109202502 A (XI'AN SPACE ENGINE CO., LTD.) 15 January 2019 (2019-01-15) entire document | 1-10 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 January 2025** | **25 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/127324**

| Patent document cited in search report | | | Publication date (day/month/year) | Patent family member(s) | | | Publication date (day/month/year) |
|---|---|---|---|---|---|---|---|
| CN | 115647177 | A | 31 January 2023 | None | | | |
| CN | 116871389 | A | 13 October 2023 | None | | | |
| CN | 111922167 | A | 13 November 2020 | None | | | |
| CN | 101596649 | A | 09 December 2009 | CN | 101596649 | B | 20 April 2011 |
| CN | 114799001 | A | 29 July 2022 | CN | 114799001 | B | 16 July 2024 |
| CN | 109202502 | A | 15 January 2019 | CN | 109202502 | B | 10 September 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311431664